# FASCICULE DE BREVET EUROPEEN

(11) **EP 3 589 076 B1**
(45) Date de publication et mention de la délivrance du brevet: **09.06.2021**
(21) Numéro de dépôt: 19180748.6
(22) Date de dépôt: 18.06.2019
(51) Int. Cl.: H04W 88/16, H04W 52/02

(54) **DÉLÉGATION DE GESTION D'ACQUITTEMENTS ET DE TRANSMISSION DE TRAMES**
DELEGIERUNG VON BESTÄTIGUNGSMANAGEMENT UND RAHMENÜBERTRAGUNG
DELEGATION OF ACKNOWLEDGEMENT MANAGEMENT AND FRAME TRANSMISSION

(30) Priorité: 28.06.2018 FR 1855823
(43) Date de publication de la demande: 01.01.2020
(73) Titulaire: SAGEMCOM ENERGY & TELECOM SAS, 92500 Rueil-Malmaison (FR)
(72) Inventeur: TEBOULLE, Henri, 92500 Rueil Malmaison (FR); LE GOURRIEREC, Marc, 92500 Rueil Malmaison (FR); HARNAY, Franck, 92500 Rueil Malmaison (FR)
(74) Mandataire: Cabinet Le Guen Maillet

(56) Documents cités:
- US-A1- 2018 132 177
- Lora Alliance ET AL: "LoRaWAN(TM) - What Is It? A technical overview of LoRa and LoRaWAN(TM)", , 1 novembre 2015 (2015-11-01), XP055569571, Extrait de l'Internet: URL:https://lora-alliance.org/sites/defaul t/files/2018-04/what-is-lorawan.pdf [extrait le 2019-03-15]

## Description

La présente invention concerne une délégation d'acquittements et de transmission de trames descendantes dans un système de communication.

L'Internet des Objets (« Internet of Things » en anglais) émerge. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple pour effectuer une collecte de relevés de consommations électriques ou de consommations d'eau. L'Internet des Objets est considéré comme la troisième évolution de l'Internet, baptisée Web 3.0. L'Internet des Objets est en partie responsable de l'accroissement actuel du volume de données à transmettre et à stocker, et est ainsi à l'origine de ce qu'on appelle le « Big Data ». L'Internet des Objets revêt un caractère universel pour désigner une mise en communication d'objets aux usages variés, par exemple dans le domaine industriel, agro-alimentaire, de la e-santé ou de la domotique.

Pour permettre à des objets communicants, aussi appelés dispositifs terminaux, de communiquer dans le cadre de l'Internet des Objets, des passerelles de collecte (« gathering gateways » en anglais) situées sur des points géographiquement hauts sont déployées par un opérateur. Hors opérations de maintenance, ces passerelles sont typiquement fixes et permanentes. On peut par exemple citer sur ce modèle les réseaux SigFox (marque déposée) ou ThingPark (marque déposée). Ces passerelles de collecte communiquent avec les dispositifs terminaux grâce à des communications radio moyenne ou longue portée, comme par exemple la technologie LoRaWAN (« Long Range Wide-Area Network » en anglais), aussi connue sous le diminutif « LoRa » (« Long Range » en anglais) du nom de l'alliance faisant la promotion de la technologie LoRaWAN. Ces passerelles de collecte servent ainsi de relais entre les dispositifs terminaux et un serveur (réseau cœur) configuré pour traiter des informations remontées par les dispositifs terminaux et pour envoyer des messages (e.g. instructions) auxdits dispositifs terminaux.

Pour pouvoir se mettre en veille autant que possible, les dispositifs terminaux appliquent, dans leurs communications indirectes avec le serveur (via une ou plusieurs passerelles de collecte), un mécanisme de communication dit en « Classe A » dans le protocole de transmission de données de type LoRaWAN. Ce mécanisme consiste à définir, de manière déterministe pour un dispositif terminal considéré et la passerelle de collecte qui agit comme relais pour le serveur, une ou plusieurs fenêtres de réception pendant lesquelles le dispositif terminal considéré écoute le medium de communication (deux fenêtres de réception dans le cas du protocole de transmission de données de type LoRaWAN) où les communications descendantes doivent être effectuées. Une ou plusieurs fenêtres de réception débutent à la fin d'une période de durée prédéfinie d'après un instant de transmission de trame ascendante par le dispositif terminal en question et ont, elles aussi, une durée prédéfinie. Une trame descendante qui doit être adressée audit dispositif terminal est alors effectuée dans l'une ou l'autre (le cas échéant) desdites fenêtres de réception, notamment pour effectuer un acquittement de ladite trame ascendante. Il est en effet typiquement nécessaire que le dispositif terminal en question sache que le serveur a effectivement reçu la trame ascendante transmise par ledit dispositif terminal. Cette approche par fenêtres de réception débutant à des instants déterministes pour le dispositif terminal en question et la passerelle de collecte qui agit comme relais pour le serveur permet audit dispositif terminal de se mettre en veille entretemps et de préserver ainsi son autonomie énergétique. Cependant, il n'est pas certain que le temps d'aller-retour entre les passerelles de collecte et le serveur permette systématiquement de respecter ces fenêtres de réception. Or la variabilité de latence entre les passerelles de collecte et le serveur, ainsi que peut mener à rater une ou plusieurs fenêtres de réception, voire à toutes les fenêtres de réception, ce qui va nécessiter d'attendre que le dispositif terminal en question réémette une trame ascendante. Et, de manière secondaire, lorsque plusieurs fenêtres de réception sont définies pour une même trame ascendante, il est préférable d'utiliser la première fenêtre de réception en séquence, de manière à permettre au dispositif terminal en question de ne pas avoir à se réveiller pour toute fenêtre de réception ultérieure qui a été définie d'après la transmission de la même trame ascendante et ce, afin de préserver les ressources énergétiques dudit dispositif terminal.

Le document US 2018/132177 A1 décrit un système de communication comportant un serveur, un dispositif terminal et une passerelle servant de relais, et dans lequel il est identifié une ou plusieurs fenêtres de réception à désactiver pendant un certain temps, pour des communications ascendantes.

Le document « spécifications LoRaWAN » décrit des systèmes de communication utilisant le protocole de transmission de données LoRaWAN.

Il est souhaitable de pallier ces inconvénients de l'état de la technique, que l'on peut retrouver plus généralement dans les réseaux de communication sans-fil fonctionnant sur de telles fenêtres de réception (au-delà des technologies radio utilisées dans les réseaux étendus à faible puissance LPWAN).

L'invention concerne un procédé de gestion d'acquittements et de transmissions descendantes dans un système de communication comprenant un serveur, au moins un dispositif terminal et au moins une passerelle de collecte servant de relais entre le serveur et ledit au moins un terminal, chaque dispositif terminal communiquant avec au moins une dite passerelle de collecte via un medium de communication sans-fil, chaque dispositif terminal transmettant à destination du serveur des trames ascendantes ayant des instants de transmission d'après lesquels sont définies des fenêtres de réception destinées à des trames descendantes supposées être construites par le serveur et relayées via le medium de communication sans-fil par une dite passerelle de collecte sélectionnée par le serveur. Un mécanisme débrayable de délégation vis-à-vis d'au moins un dispositif terminal élu est implémenté en collaboration avec le serveur par une passerelle de collecte élue effectuant les étapes suivantes : affecter un tampon à chaque dispositif terminal élu et y stocker des données utiles reçues de manière asynchrone depuis le serveur à l'attention dudit dispositif terminal élu ; et acquitter les trames ascendantes reçues depuis chaque dispositif terminal élu en construisant et en transmettant dans des dites fenêtres de réception définies d'après les instants de transmission desdites trames ascendantes, pour le compte du serveur, des trames descendantes incluant des acquittements respectifs desdites trames ascendantes et incluant, le cas échéant, des données utiles stockées dans le tampon affecté audit dispositif terminal. Ainsi, aucune fenêtre de réception n'est ratée à cause de la variabilité de latence entre les passerelles de collecte et le serveur. De plus, une unique fenêtre de réception peut suffire pour acquitter chaque trame ascendante et transmettre les éventuelles données utiles à adresser au dispositif terminal en question. Une meilleure réactivité du système de communication est ainsi atteinte. De plus, les ressources énergétiques des dispositifs terminaux sont mieux gérées. Enfin, la charge de traitement normalement dévolue au serveur peut être répartie sur les passerelles de collecte.

Selon un mode de réalisation particulier, la passerelle de collecte élue effectue les étapes suivantes, sur réception d'une trame ascendante : relayer la trame ascendante vers le serveur ; dans le cas où la trame ascendante est reçue depuis un dispositif terminal élu, construire la trame descendante pour le compte du serveur, puis transmettre la trame descendante construite dans une fenêtre de réception définie d'après un instant de transmission de ladite trame ascendante ; et dans le cas où la trame ascendante est reçue depuis un dispositif terminal non élu, garder une trace qu'un retour est attendu du serveur vis-à-vis dudit dispositif terminal pour ladite trame ascendante. De plus, la passerelle de collecte élue effectue les étapes suivantes, sur réception d'une trame descendante : dans le cas où la trame descendante concerne un dispositif terminal élu, placer les données utiles, fournies dans la trame descendante par le serveur, dans le tampon affecté audit dispositif terminal élu ; et dans le cas où la trame descendante concerne un dispositif terminal non élu, lorsqu'une trace a été gardée qu'un retour est attendu du serveur vis-à-vis d'une trame ascendante reçue dudit dispositif terminal non élu, relayer la trame descendante dans une dite fenêtre de réception définie d'après un instant de réception de ladite trame ascendante, et jeter la trame descendante sinon.

Selon un mode de réalisation particulier, sur ordre de désactivation du mécanisme de délégation vis-à-vis d'un dit dispositif terminal élu, la passerelle de collecte élue effectue les étapes suivantes : si le tampon affecté au dispositif terminal élu est vide, confirmer auprès du serveur que le mécanisme de délégation est désactivé vis-à-vis dudit dispositif terminal élu ; si le tampon affecté au dispositif terminal élu n'est pas vide, maintenir le mécanisme de délégation jusqu'à ce que ledit tampon soit vidé par construction et transmission de dites trames descendantes par la passerelle de collecte élue.

Selon un mode de réalisation particulier, sur ordre d'activation du mécanisme de délégation vis-à-vis d'un dit dispositif terminal élu, une dite passerelle de collecte devient la passerelle de collecte élue pour ledit dispositif terminal élu et reçoit du serveur une valeur de compteur de trames descendantes. De plus, la passerelle de collecte élue incrémente la valeur du compteur de trames descendantes au fil des constructions desdites trames descendantes à l'attention dudit dispositif terminal élu et inclut la valeur incrémentée du compteur de trames descendantes dans lesdites trames descendantes. Et, sur ordre de désactivation du mécanisme de délégation vis-à-vis dudit dispositif terminal élu, la passerelle de collecte élue inclut une valeur à jour du compteur de trames descendantes dans un message confirmant auprès du serveur que le mécanisme de délégation est désactivé vis-à-vis dudit dispositif terminal élu.

Selon un mode de réalisation particulier, sur ordre d'activation du mécanisme de délégation vis-à-vis dudit dispositif terminal élu, la passerelle de collecte élue reçoit du serveur une information indiquant quel format est utilisé pour représenter la valeur du compteur de trames descendantes.

Selon un mode de réalisation particulier, sur ordre d'activation du mécanisme de délégation vis-à-vis d'un dit dispositif terminal élu, la passerelle de collecte élue reçoit du serveur des clefs de sécurité pour authentifier ledit dispositif terminal élu dans chaque trame ascendante supposée être reçue depuis ledit dispositif terminal élu et pour chiffrer toute trame descendante construite par la passerelle de collecte élue à l'attention dudit dispositif terminal élu.

Selon un mode de réalisation particulier, le système de communication est un réseau étendu à faible puissance LPWAN.

L'invention concerne également une passerelle de collecte, dite passerelle de collecte élue, dans le cadre d'une gestion d'acquittements et de transmissions descendantes dans un système de communication comprenant un serveur, au moins un dispositif terminal et au moins une passerelle de collecte servant de relais entre le serveur et ledit au moins un terminal, chaque dispositif terminal communiquant avec au moins une dite passerelle de collecte via un medium de communication sans-fil, chaque dispositif terminal transmettant à destination du serveur des trames ascendantes ayant des instants de transmission d'après lesquels sont définies des fenêtres de réception destinées à des trames descendantes supposées être construites par le serveur et relayées via le medium de communication sans-fil par une dite passerelle de collecte sélectionnée par le serveur. La passerelle de collecte élue implémente en collaboration avec le serveur un mécanisme débrayable de délégation vis-à-vis d'au moins un dispositif terminal élu, dans lequel ladite passerelle de collecte élue comporte : des moyens pour affecter un tampon à chaque dispositif terminal élu et y stocker des données utiles reçues de manière asynchrone depuis le serveur à l'attention dudit dispositif terminal élu ; et des moyens pour acquitter les trames ascendantes reçues depuis chaque dispositif terminal élu en construisant et en transmettant dans des dites fenêtres de réception définies d'après les instants de transmission desdites trames ascendantes, pour le compte du serveur, des trames descendantes incluant des acquittements respectifs desdites trames ascendantes et incluant, le cas échéant, des données utiles stockées dans le tampon affecté audit dispositif terminal.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également un medium de stockage d'informations stockant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication ;
- la Fig. 2 illustre schématiquement un exemple d'architecture matérielle d'un dispositif de communication ;
- la Fig. 3 illustre schématiquement un exemple d'architecture protocolaire ;
- la Fig. 4 illustre schématiquement un algorithme d'activation de mécanisme de délégation ;
- la Fig. 5 illustre schématiquement un algorithme de désactivation de mécanisme de délégation ;
- la Fig. 6 illustre schématiquement un algorithme de traitement de trame ascendante ;
- la Fig. 7 illustre schématiquement un algorithme de traitement de trame descendante ;
- la Fig. 8 illustre schématiquement un algorithme de traitement de changement de délégation ; et
- la Fig. 9 illustre schématiquement des échanges aux fins d'une mise en place du mécanisme de délégation, dans un mode de réalisation particulier.

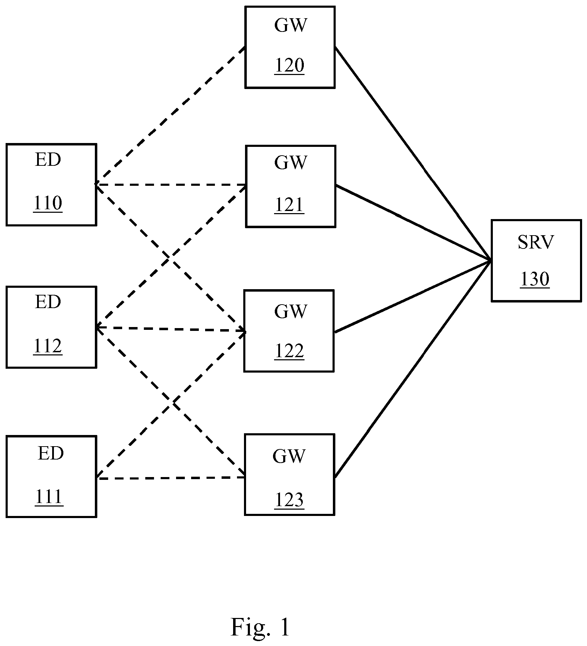

La **Fig. 1** illustre schématiquement un système de communication dans lequel la présente invention peut être implémentée. Le système de communication comporte au moins une passerelle de collecte 120, 121, 122, 123 (notées GW, pour « GateWay » en anglais, sur les Figs.). Les passerelles de collecte 120, 121, 122, 123 disposent de liens de communication respectifs avec un serveur 130 (noté SRV sur les Figs.) auquel lesdites passerelles de collecte 120, 121, 122, 123 sont rattachées. Par exemple, le serveur 130 est de type LNS (« LoRaWAN Network Server » en anglais). Quatre passerelles de collecte sont représentées sur la Fig. 1, mais le système de communication peut comporter une quantité différente de passerelles de collecte.

Dans le système de communication, des messages doivent être remontés sous forme de trames depuis un ensemble de dispositifs terminaux 110, 111, 112 (notés ED, pour « End Device » en anglais, sur les Figs.) jusqu'au serveur 130. Trois dispositifs terminaux sont représentés sur la Fig. 1, mais le système de communication peut comporter une quantité différente de dispositifs terminaux.

Le serveur 130 a un rôle de contrôle et de collecte d'informations disponibles auprès des dispositifs terminaux 110, 111, 112, et les passerelles de collecte 120, 121, 122, 123 ont un rôle de relais entre les dispositifs terminaux 110, 111, 112 et le serveur 130. Pour permettre de remplir ce rôle de relais, chaque passerelle de collecte 120, 121, 122, 123 dispose d'au moins une interface radio permettant à ladite passerelle de collecte de communiquer avec au moins un dispositif terminal 110, 111, 112 en s'appuyant sur un medium de communication sans-fil, et préférentiellement selon une technologie de communication de type LPWAN. Ladite interface radio est par exemple de type LoRa permettant ainsi d'implémenter, au sein du système de communication, un protocole de transmission de données de type LoRaWAN modifié comme décrit ci-après. Ladite interface radio est telle qu'un dispositif terminal peut être à portée de communication par voie radio d'une pluralité de passerelles de collecte, selon la position géographique dudit dispositif terminal par rapport aux passerelles de collecte 120, 121, 122, 123 et des conditions de transmission par voie radio dans l'environnement dudit dispositif terminal et des passerelles de collecte 120, 121, 122, 123. C'est le cas par exemple du dispositif terminal 110 sur la Fig. 1, qui est à portée de communication par voie radio des passerelles de collecte 120, 121 et 122 (matérialisation par des traits pointillés sur la Fig. 1). De plus, chaque passerelle de collecte 120, 121, 122, 123 dispose d'au moins une autre interface permettant à ladite passerelle de collecte de communiquer avec le serveur 130. Par exemple, cette autre interface est une interface filaire permettant de de communiquer avec le serveur 130 via l'Internet ou une interface radio de type GPRS (« General Packet Radio Service » en anglais).

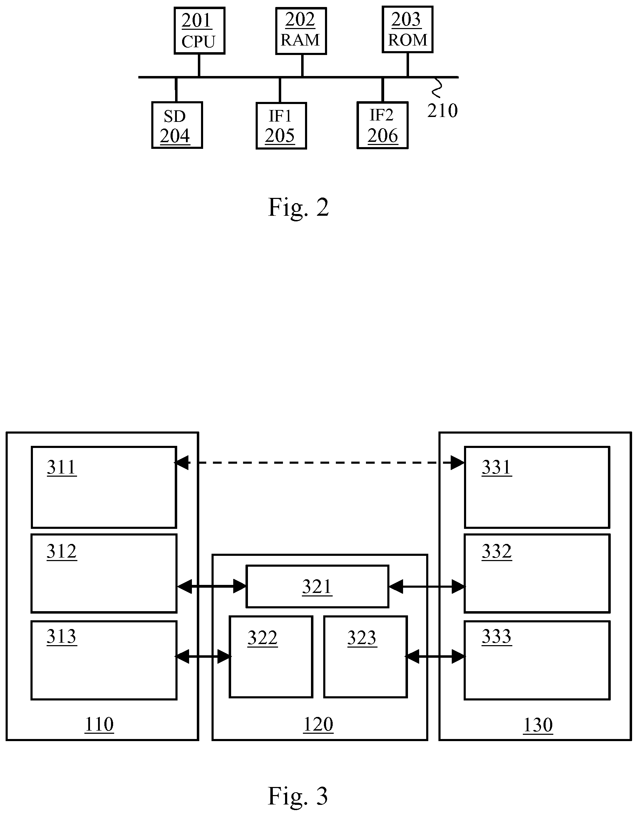

Un exemple d'architecture protocolaire implémentée dans le système de communication pour ainsi permettre aux dispositifs terminaux 110, 111, 112 et au serveur 130 de communiquer via les passerelles de collecte 120, 121, 122, 123 est décrit ci-après en relation avec la Fig. 3.

Au moins une passerelle de collecte 120, 121, 122, 123 du système de communication est compatible avec un mécanisme de délégation, tel que détaillé ci-après, sous contrôle du serveur 130.

La **Fig. 2** illustre schématiquement un exemple d'architecture matérielle d'un dispositif de communication du système de communication de la Fig. 1. Chaque dispositif terminal 110, 111, 112 et/ou chaque passerelle de collecte 120, 121, 122, 123 et/ou le serveur 130 peuvent être construits sur la base d'une telle architecture matérielle.

Le dispositif de communication comporte, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, comme un lecteur de cartes SD (« Secure Digital » en anglais) 204 ou un disque dur HDD (« Hard Disk Drive » en anglais) ; une interface de communication IF1 205, et éventuellement une autre interface de communication IF2 206.

Lorsque le dispositif de communication de la Fig. 2 représente un dispositif terminal du système de communication, l'interface de communication IF1 205 est configurée pour permettre audit dispositif terminal de communiquer avec des passerelles de collecte du système de communication.

Lorsque le dispositif de communication de la Fig. 2 représente une passerelle de collecte 120, 121, 122, 123 du système de communication, l'interface de communication IF1 205 est configurée pour permettre à ladite passerelle de collecte de communiquer avec des dispositifs terminaux du système de communication, et l'autre interface de communication IF2 206 est configurée pour permettre à ladite passerelle de collecte de communiquer avec le serveur 130.

Lorsque le dispositif de communication de la Fig. 2 représente le serveur 130, l'interface de communication IF1 205 est configurée pour permettre audit serveur 130 de communiquer avec les passerelles de collecte 120, 121, 122, 123, d'une manière compatible avec l'interface de communication IF2 206 des passerelles de collecte 120, 121, 122, 123.

Le processeur 201 est capable d'exécuter des instructions chargées dans la mémoire RAM 202 à partir de la mémoire ROM 203, d'une mémoire externe, d'un support de stockage, ou d'un réseau de communication. Lorsque le dispositif de communication en question est mis sous tension, le processeur 201 est capable de lire de la mémoire RAM 202 des instructions et de les exécuter. Ces instructions forment un programme d'ordinateur causant la mise en œuvre, par le processeur 201, de tout ou partie des algorithmes et étapes décrits ici en relation avec le dispositif de communication en question.

Ainsi, tout ou partie des algorithmes et étapes décrits ici peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, le dispositif de communication en question comporte de la circuiterie électronique adaptée et configurée pour implémenter les algorithmes et étapes décrits ici en relation avec le dispositif de communication en question.

La **Fig. 3** illustre schématiquement un exemple d'architecture protocolaire implémentée dans le système de communication de la Fig. 1. L'architecture protocolaire est répartie entre les dispositifs terminaux, les passerelles de collecte et le serveur 130. Considérons à titre illustratif des communications entre le dispositif terminal 110 et le serveur 130 via la passerelle de collecte 120.

Le dispositif terminal 110 comporte une couche haute 311 et une couche basse 313, ainsi qu'une couche intermédiaire 312 faisant le lien entre la couche haute 311 et la couche basse 313. La couche haute 311 est une application client. Le dispositif terminal 110 peut ainsi comporter plusieurs applications client. La couche intermédiaire 312 implémente le protocole d'échange, par exemple de type LoRaWAN, entre le dispositif terminal 110 et le serveur 130. La couche basse 313 est la couche physique (PHY) de l'interface radio du dispositif terminal 110, par exemple de type LoRa, qui permet audit dispositif terminal 110 de communiquer avec les passerelles de collecte du système de communication, comme par exemple la passerelle de collecte 120.

Le serveur 130 comporte une couche haute 331 et une couche basse 333, ainsi qu'une couche intermédiaire 332 faisant le lien entre la couche haute 331 et la couche basse 333. La couche haute 331 est une application serveur. Le serveur 130 peut ainsi comporter plusieurs applications serveur. Il convient de noter que la représentation de la Fig. 3 est une représentation logique, et que les applications serveur peuvent être exécutées sur des équipements respectifs distincts du serveur 130.

La couche intermédiaire 332 implémente le protocole d'échange, par exemple de type HTTPS (« HyperText Transfer Protocol Secure » en anglais), entre le serveur 130 et les passerelles de collecte 120, 121, 122, 123. La couche basse 333 est la couche physique (PHY) de l'interface du serveur 130 qui permet de communiquer avec les passerelles de collecte 120, 121, 122, 123.

La passerelle de collecte 120 comporte une première couche basse 322 et une seconde couche basse 323, ainsi qu'un module d'adaptation 321. La première couche basse 322 est la couche physique (PHY) de l'interface radio de la passerelle de collecte 120 qui permet de communiquer avec des dispositifs terminaux du système de communication, comme par exemple le dispositif terminal 110. La seconde couche basse 323 est la couche physique (PHY) de l'interface de la passerelle de collecte 120 qui permet de communiquer avec le serveur 130. Le module d'adaptation 321 est configuré pour convertir les trames reçues via la première couche basse 322 dans un format adapté à la seconde couche basse 323, et vice versa, de manière à faire suivre les trames depuis le dispositif terminal 110 jusqu'au serveur 130, et vice versa. Lors de cette conversion, la passerelle de collecte 120 peut enrichir ladite trame par des informations complémentaires, comme par exemple une indication de niveau de signal reçu RSSI déterminé par ladite passerelle de collecte 120 sur réception de la trame en provenance du dispositif terminal 110.

L'architecture protocolaire représentée sur la Fig. 3 est telle que la couche intermédiaire 312 du dispositif terminal 110 communique avec la couche intermédiaire 321 de la passerelle 120, en s'appuyant sur les couches basses respectives du dispositif terminal 110 et de la passerelle de collecte 120. L'architecture protocolaire représentée sur la Fig. 3 est aussi telle que la couche haute 311 du dispositif terminal 110 communique avec la couche haute 331 du serveur 130, en s'appuyant sur les couches intermédiaires respectives 312, 321, 332 du dispositif terminal 110 et du serveur 130. Une même application serveur peut ainsi communiquer avec des applications client respectives exécutées sur autant de dispositifs terminaux, et un même dispositif terminal exécutant une pluralité d'applications client peut ainsi communiquer avec autant d'applications serveur exécutées sur le serveur 130.

Les couches et modules protocolaires représentés peuvent être complétés, notamment par des piles protocolaires permettant au serveur 130 d'échanger avec la passerelle de collecte 120, notamment pour permettre au serveur 130 de configurer la passerelle de collecte 120 vis-à-vis du mécanisme de délégation.

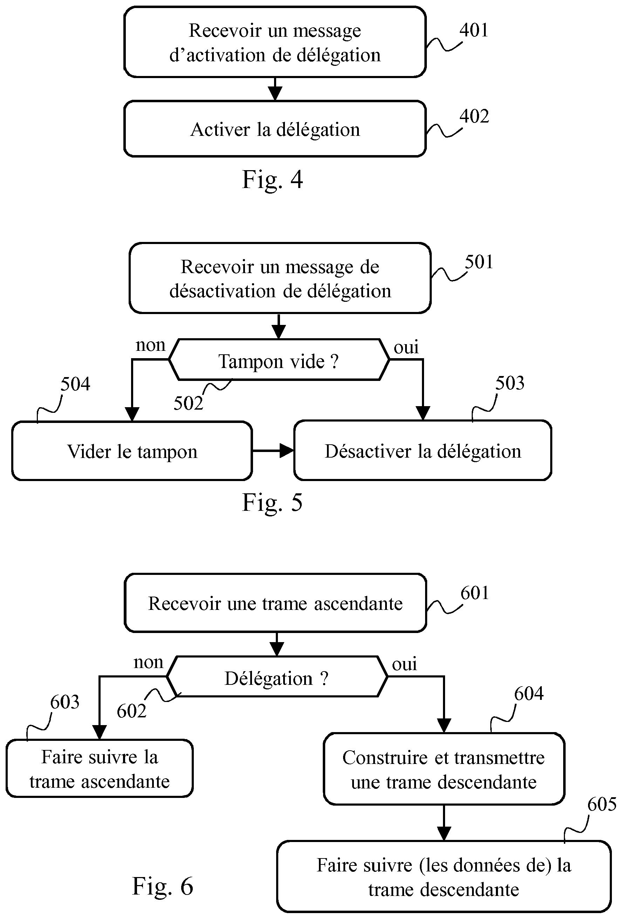

Lorsque le serveur 130 décide d'activer le mécanisme de délégation auprès de la passerelle de collecte 120 vis-à-vis d'un dispositif terminal considéré, une partie des fonctions assurées par la couche intermédiaire 332 dans ses communications avec le dispositif terminal considéré est transférée sous la responsabilité du module d'adaptation 321. Le mode d'adaptation 321 continue de faire suivre au serveur 130 les trames reçues en provenance du dispositif terminal 110, dites trames ascendantes (« uplink » en anglais), et de faire suivre au dispositif terminal 110 les trames reçues en provenance du serveur 130, dites trames descendantes (« downlink » en anglais). Mais, en outre, le mode d'adaptation 321 anticipe l'acquittement des trames ascendantes pour le compte de la couche intermédiaire 332 du serveur 130. De plus, le mode d'adaptation 321 active un tampon (« buffer » en anglais) permettant au serveur 130 de déporter au plus près du dispositif terminal 110 le stockage de trames descendantes à faire parvenir au dispositif terminal 110. Le remplissage de ce tampon s'effectue alors de manière asynchrone, c'est-à-dire sans tenir compte du synchronisme transmission-réception à respecter via les fenêtres de réception entre les passerelles de collecte et les dispositifs terminaux. Ainsi, lorsqu'une trame ascendante est reçue du dispositif terminal 110, la passerelle de collecte dispose des données et mécanismes nécessaires pour acquitter au plus vite la trame ascendante, et au besoin, transmettre au dispositif terminal 110 des données qui lui sont destinées de la part du serveur 130. Cet aspect est détaillé par la suite en relation avec les Figs. 4 à 9.

La **Fig. 4** illustre schématiquement un algorithme d'activation du mécanisme de délégation vis-à-vis d'un dispositif terminal. L'algorithme de la Fig. 4 est implémenté par chaque passerelle de collecte compatible avec le mécanisme de délégation. Considérons à titre illustratif que l'algorithme de la Fig. 4 est implémenté par la passerelle de collecte 120.

Dans une étape 401, la passerelle de collecte 120 reçoit un message START-RQ représentatif d'une demande d'activation du mécanisme de délégation vis-à-vis d'un dispositif terminal. On peut alors parler de « passerelle de collecte élue » et de « dispositif terminal élu », car ils ont été sélectionnés pour la mise en place du mécanisme de délégation. Le message START-RQ est adressé à la passerelle de collecte 120 par le serveur 130, afin de permettre de délester le serveur 130 de certaines tâches et de réduire le temps de réaction du système de communication lorsqu'un dispositif terminal transmet une trame ascendante.

Dans une étape 402, la passerelle de collecte 120 active en interne le mécanisme de délégation. Le mécanisme de délégation concerne un dispositif terminal en particulier, tel que précisé dans le message START-RQ reçu du serveur 130. La passerelle de collecte 120 garde ainsi trace de devoir acquitter, pour le compte du serveur 130, les trames ascendantes reçues du dispositif terminal en question.

La passerelle de collecte 120 initialise en outre un tampon dédié aux transmissions descendantes souhaitées par le serveur 130 à destination du dispositif terminal en question. Ce tampon est donc affecté audit dispositif terminal et permet de rendre asynchrones, du point de vue du serveur 130, les transmissions descendantes à destination dudit dispositif terminal par rapport aux transmissions ascendantes en provenance dudit dispositif terminal.

Dans un mode de réalisation particulier, les communications entre le serveur 130 et le dispositif terminal en question sont chiffrées. Le message START-RQ contient alors toute clef de sécurité nécessaire à authentifier le dispositif terminal dans une trame ascendante reçue et à permettre de chiffrer toute trame descendante à destination dudit dispositif terminal. Plus spécifiquement, ce sont les clefs de sécurité NtwSEncKey, FNwkSIntKey et SNwkSIntKey dans le protocole LoRaWAN. Le message START-RQ peut aussi contenir une clef de sécurité permettant à la passerelle de collecte 120 de déchiffrer au besoin les trames ascendantes reçues dudit dispositif terminal, ce qui permet de décharger d'autant les tâches du serveur 130 surtout lorsque les communications entre les passerelles de collecte et le serveur 130 sont elles-mêmes sécurisées. Ces clefs de sécurité étant uniques pour chaque dispositif terminal, le message START-RQ inclut lesdites clefs de sécurité, éventuellement elles-mêmes sous forme chiffrée grâce à une autre clef de sécurité préalablement connue du serveur 130 et de la passerelle de collecte 120.

Dans un mode de réalisation particulier, les échanges entre le serveur 130 et chaque dispositif terminal sont régis grâce à des compteurs. C'est le cas par exemple dans le protocole LoRaWAN, où un compteur de trames ascendantes est maintenu par le dispositif terminal considéré et un compteur de trames descendantes est maintenu, vis-à-vis dudit dispositif terminal, par le serveur 130. Plus, spécifiquement le compteur de trames descendantes, dénommé NFCntDown, indique la quantité de trames descendantes transmises par le serveur 130 à destination du dispositif terminal en question. Lorsque le dispositif terminal reçoit une nouvelle trame descendante, il compare la valeur du compteur NFCntDown indiquée dans la trame par rapport à la valeur dudit compteur indiquée dans la dernière trame descendante reçue en provenance du serveur 130. Si la valeur indiquée dans la nouvelle trame descendante est supérieure, le dispositif terminal traite la nouvelle trame descendante, sinon le dispositif terminal jette la nouvelle trame descendante. Ainsi, en délégant la transmission des trames descendantes à la passerelle de collecte 120, le serveur 130 délègue aussi la gestion du compteur de trames descendantes NFCntDown. La valeur courante du compteur de trames descendantes NFCntDown est alors fournie par le serveur 130 dans le message START-RQ.

A noter que les applications client et serveur peuvent aussi maintenir leurs propres compteurs. C'est aussi le cas dans le protocole LoRaWAN, où un compteur de trames applicatives descendantes AFCntDown est maintenu. Cependant ce compteur de trames applicatives descendantes AFCntDown est indépendant du compteur de trames descendantes NFCntDown, de sorte à effectuer une abstraction, au niveau applicatif, des modes de communication effectivement utilisés entre le serveur 130 et le dispositif terminal considéré.

De plus, dans un mode de réalisation particulier, les valeurs du compteur de trames ascendantes et du compteur de trames descendantes peuvent, par choix du serveur 130 ou par choix de conception du système de communication, être représentées sous différents formats. Le serveur 130 peut ainsi utiliser un certain format avec certains dispositifs terminaux et un autre format avec d'autres dispositifs terminaux. Dans ce cas, le message START-RQ précise quel format est utilisé vis-à-vis du dispositif terminal concerné par ledit message START-RQ. Par exemple, un premier format correspond à un comptage sur 16 bits et un second format correspond à un comptage sur 32 bits, et un bit du message START-RQ est utilisé pour indiquer si le comptage est effectué sur 16 ou 32 bits.

La **Fig. 5** illustre schématiquement un algorithme de désactivation du mécanisme de délégation vis-à-vis d'un dispositif terminal. Considérons à titre illustratif que l'algorithme de la Fig. 5 est implémenté par la passerelle de collecte 120.

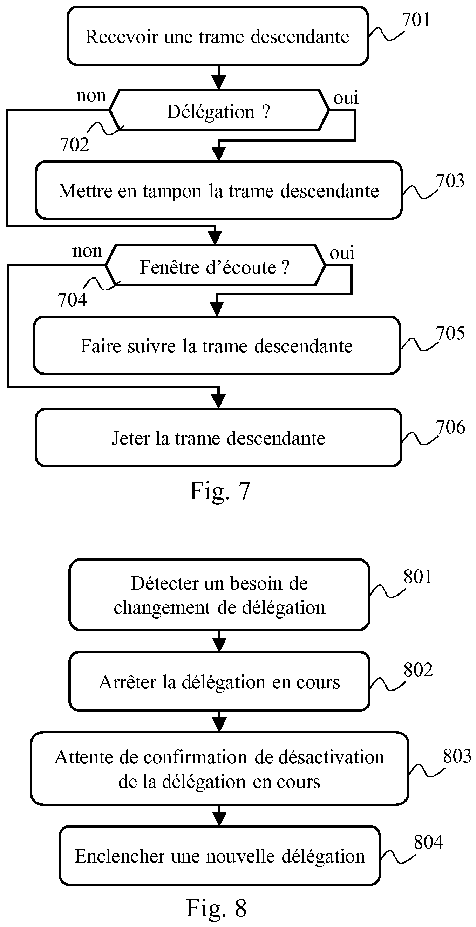

Dans une étape 501, la passerelle de collecte 120 reçoit un message STOP-RQ représentatif d'une demande de désactivation du mécanisme de délégation vis-à-vis d'un dispositif terminal pour lequel le serveur 130 a précédemment fait activer le mécanisme de délégation auprès de ladite passerelle de collecte 120. Le message STOP-RQ est adressé à la passerelle de collecte 120 par le serveur 130. Selon un premier exemple, le serveur 130 souhaite mettre fin à la délégation vis-à-vis dudit dispositif terminal afin de transférer la délégation à une autre passerelle de collecte. En effet, la délégation vis-à-vis d'un dispositif terminal ne peut être confiée qu'à une seule passerelle de collecte, pour éviter des conflits d'acquittement de trame ascendante. Cet aspect est présenté par la suite en relation avec la Fig. 8. Selon un second exemple, le serveur 130 souhaite débrayer le mécanisme de délégation vis-à-vis dudit dispositif terminal parce que le serveur 130 a plus de ressources de traitement disponibles que précédemment.

Dans une étape 502, la passerelle de collecte 120 vérifie si le tampon associé à la délégation est vide ou pas. En d'autres termes, la passerelle de collecte 120 vérifie si des données utiles à l'attention du dispositif terminal en question sont encore en attente de transmission. Si le tampon est vide, la passerelle de collecte 120 peut repasser la main au serveur 130 et une étape 504 est effectuée ; sinon, la passerelle de collecte doit attendre que le tampon devienne vide, et une étape 503 est effectuée.

Dans l'étape 503, la passerelle de collecte 120 vide le tampon en transmettant, à destination du dispositif terminal, les données utiles encore en attente pour le dispositif terminal concerné. La passerelle de collecte 120 doit transmettre lesdites données utiles sous forme de transmissions descendantes dans des fenêtres de réception qui sont définies d'après des instants de transmission de trames ascendantes par le dispositif terminal en question, car le reste du temps ledit dispositif terminal est probablement en veille. En d'autres termes, la passerelle de collecte 120 maintient le mécanisme de délégation jusqu'à ce que ledit tampon soit vidé. Les transmissions de trames descendantes par la passerelle de collecte 120 pour le compte du serveur 130 sont par ailleurs détaillées ci-après en relation avec la Fig. 7. Ensuite, l'étape 504 est effectuée.

Dans l'étape 504, la passerelle de collecte 120 désactive en interne le mécanisme de délégation pour le dispositif terminal précisé dans le message STOP-RQ reçu du serveur 130. La passerelle de collecte 120 arrête alors d'acquitter, pour le compte du serveur 130, les trames ascendantes reçues du dispositif terminal en question. De plus, la passerelle de collecte 120 libère le tampon qui était affecté à la délégation pour ledit dispositif terminal.

Dans le mode de réalisation particulier où les communications entre le serveur 130 et le dispositif terminal en question sont chiffrées, la passerelle de collecte 120 efface les clefs de sécurité associées audit dispositif terminal.

Après avoir désactivé en interne le mécanisme de délégation pour le dispositif terminal en question, la passerelle de collecte 120 confirme la désactivation auprès du serveur 130 par un message STATUS. Le serveur 130 sait alors que toutes les trames descendantes, dont la gestion de transmission a été déléguée à la passerelle de collecte 120 vis-à-vis du dispositif terminal en question, ont été transmises à destination dudit dispositif terminal.

Dans le mode de réalisation particulier où les échanges entre le serveur 130 et chaque dispositif terminal sont régis grâce à des compteurs, le message STATUS inclut la valeur à jour du compteur de trames descendantes. Ainsi, le serveur 130 peut reprendre la main sur la gestion de transmission des trames descendantes ou passer la main à une autre passerelle de collecte de manière transparente pour le dispositif terminal (élu) en question.

Il est donc apparent, au vu de ce qui précède, que le mécanisme de délégation est débrayable.

Il convient de noter que, dans un mode de réalisation particulier, le serveur 130 peut, avec un même message STOP-RQ, demander à la passerelle de collecte élue considérée de désactiver le mécanisme de délégation pour tous les dispositifs terminaux pour lesquels le serveur 130 a confié à ladite passerelle de collecte élue la gestion des acquittements et des transmissions de trames descendantes. Auquel cas, l'algorithme de la Fig. 5 est exécuté pour chacun des dispositifs terminaux concernés, sachant qu'un unique message STATUS peut être envoyé au serveur 130 pour tous les dispositifs terminaux en question.

La **Fig. 6** illustre schématiquement un algorithme de traitement de trame ascendante. L'algorithme de la Fig. 6 est implémenté par chaque passerelle de collecte compatible avec le mécanisme de délégation. Considérons à titre illustratif que l'algorithme de la Fig. 6 est implémenté par la passerelle de collecte 120.

Dans une étape 601, la passerelle de collecte 120 reçoit une trame ascendante en provenance d'un dispositif terminal. La trame ascendante précise de quel dispositif terminal ladite trame ascendante émane.

Dans une étape 602, la passerelle de collecte 120 vérifie si le mécanisme de délégation a été activé vis-à-vis dudit dispositif terminal ou pas. Si tel est le cas, une étape 604 est effectuée ; sinon, une étape 603 est effectuée.

Dans l'étape 603, la passerelle de collecte 120 fait suivre la trame ascendante au serveur 130, de sorte que l'application serveur concernée puisse en traiter le contenu. La passerelle de collecte 120 sert ici simplement de relais et garde trace qu'un retour est attendu du serveur 130 vis-à-vis de ladite trame ascendante au moins pour acquitter ladite trame ascendante et éventuellement pour fournir des données utiles complémentaires.

La passerelle de collecte 120 garde trace de la réception de ladite trame ascendante et de l'instant auquel ladite trame ascendante a été reçu, de manière à pouvoir ultérieurement déterminer la fenêtre de réception à utiliser. Lorsque le serveur 130 envoie ultérieurement la trame descendante à faire suivre au dispositif terminal en question en réponse à la dite trame ascendante, le serveur 130 fournit une information temporelle représentative d'une durée et la passerelle de collecte 120 ajoute ladite durée à l'instant auquel ladite trame ascendante a été reçu pour déterminer quel est l'instant de début de la fenêtre de réception à utiliser.

En variante, la passerelle de collecte 120 programme (« schedule » en anglais) au moins une fenêtre de réception pour ledit dispositif terminal, dans laquelle la passerelle de collecte 120 est supposée relayer une trame descendante qui sera ultérieurement fournie par le serveur 130 (cas ici d'un dispositif terminal qui n'est pas un dispositif terminal élu). La passerelle de collecte 120 surveille alors que le serveur 130 transmet une trame descendante à faire suivre au dispositif terminal en question en réponse à la dite trame ascendante dans des délais appropriés pour respecter une dite fenêtre de réception ainsi programmée.

Dans l'étape 604, la passerelle de collecte 120 doit acquitter, pour le compte du serveur 130, la trame ascendante reçue à l'étape 601. L'acquittement doit se faire dans une dite fenêtre de réception définie d'après un instant de transmission de ladite trame ascendante, de sorte à s'assurer que ledit dispositif terminal soit à l'écoute du medium de communication à ce moment-là. La passerelle de collecte 120 vérifie si le tampon associé audit dispositif terminal contient des données utiles fournies par le serveur 130 à l'attention dudit dispositif terminal. Si le tampon ne contient pas de telles données utiles, la passerelle de collecte 120 construit une trame descendante incluant l'acquittement susmentionné et transmet la trame descendante ainsi construite à destination dudit dispositif terminal. Sinon, la passerelle de collecte 120 construit une trame descendante incluant l'acquittement susmentionné et incluant aussi des données stockées dans le tampon. Ces données sont alors effacées du tampon, et la passerelle de collecte 120 transmet la trame descendante ainsi construite à destination dudit dispositif terminal, et l'étape 604 est ensuite effectuée.

Dans le mode de réalisation particulier où les échanges entre le serveur 130 et chaque dispositif terminal sont régis grâce à des compteurs, la passerelle de collecte 120 incrémente d'une unité le compteur de trames descendantes associé audit dispositif terminal, et inscrit dans la trame descendante la valeur incrémentée du compteur de trames descendantes ainsi obtenue.

Dans le mode de réalisation particulier où la trame descendante doit être chiffrée, la passerelle de collecte 120 authentifie le dispositif terminal en décodant un code d'intégrité inclus dans la trame ascendante reçue à l'étape 601. Ce code d'intégrité est appelé MIC (« Message Integrity Code » en anglais) dans le protocole LoRaWAN. Si l'authentification échoue, la passerelle de collecte 120 jette la trame ascendante et interrompt l'exécution de l'algorithme de la Fig. 6. De plus, la passerelle de collecte 120 doit chiffrer la trame descendante construite, en utilisant les clefs de sécurité associées audit dispositif terminal, avant de transmettre la trame descendante sous forme chiffrée. La trame descendante sous forme chiffrée inclut alors aussi un code d'intégrité authentifiant le serveur 130, pour le compte duquel la passerelle de collecte 120 agit.

Dans l'étape 605, la passerelle de collecte 120 fait suivre au serveur 130 la trame ascendante ou les données contenues de la trame ascendante, de sorte que le serveur 130 puisse en traiter le contenu. La passerelle peut aussi uniquement envoyer au serveur 130 les données hors délégation. On entend par données hors délégation les données qui ne concernent pas une fonctionnalité déléguée à la passerelle de collecte 120. La passerelle collecte 120 peut ainsi par exemple ne pas propager le code d'intégrité contenu dans la trame ascendante reçue du dispositif terminal en question. Ces données peuvent être chiffrées par la passerelle de collecte 120 grâce à une clef de sécurité connue aussi du serveur 130, par exemple en utilisant un tunnel sécurisé.

On remarque, au vu de l'algorithme de la Fig. 6, que les données contenues dans une trame ascendante peuvent être relayée jusqu'au serveur 130 par plusieurs passerelles de collecte qui capteraient la trame ascendante en question. Il est alors à la charge du serveur 130 d'effectuer toute déduplication de données appropriée.

La **Fig. 7** illustre schématiquement un algorithme de traitement de trame descendante. L'algorithme de la Fig. 7 est implémenté par chaque passerelle de collecte compatible avec le mécanisme de délégation. Considérons à titre illustratif que l'algorithme de la Fig. 7 est implémenté par la passerelle de collecte 120.

Dans une étape 701, la passerelle de collecte 120 reçoit une trame descendante en provenance du serveur 130. La trame descendante précise à quel dispositif terminal ladite trame descendante est destinée.

Dans une étape 702, la passerelle de collecte 120 vérifie si le mécanisme de délégation a été activé vis-à-vis dudit dispositif terminal ou pas. Si tel est le cas, une étape 703 est effectuée ; sinon, une étape 704 est effectuée.

Dans l'étape 703, la passerelle de collecte 120 met les données contenues dans la trame descendante reçue à l'étape 701 dans le tampon associé au dispositif terminal auquel lesdites données sont destinées. On peut parler alors de « données utiles » (« useful data » en anglais) à l'attention dudit dispositif terminal. La trame descendante reçue à l'étape 701 a alors typiquement un format autre que les trames descendantes transmises par le serveur 130 lorsque le mécanisme de délégation n'est pas activé, puisqu'au moins les acquittements ne sont pas gérés par le serveur 130 lorsque le mécanisme de délégation est activé. La passerelle de collecte 120 enverra ultérieurement les données utiles ainsi reçues du serveur 130 à l'attention du dispositif terminal en question, lorsqu'une fenêtre de réception le permettra, plus particulièrement suite à une prochaine transmission ascendante de la part du dispositif terminal en question.

Dans l'étape 704, la passerelle de collecte 120 doit assurer le relais de la trame descendante reçue à l'étape 701. Etant donné que le mécanisme de délégation n'est pas activé pour le dispositif terminal en question, la passerelle de collecte 120 peut effectuer le relais vers le dispositif terminal en question uniquement s'il reste au moins une fenêtre de réception à venir d'après la trame ascendante qui a déclenché l'envoi de ladite trame descendante par le serveur 130. En d'autres termes, la passerelle de collecte 120 vérifie si ladite passerelle de collecte 120 avait gardé une trace qu'un retour était attendu du serveur 130 vis-à-vis d'une trame ascendante précédemment reçue dudit dispositif terminal en question. Si tel est le cas, une étape 705 est effectuée ; sinon, une étape 706 est effectuée.

Dans l'étape 705, la passerelle de collecte 120 fait suivre la trame descendante reçue à l'étape 701 dans une dite fenêtre de réception définie d'après un instant de transmission de la trame ascendante qui a déclenché l'envoi de ladite trame descendante par le serveur 130.

Dans l'étape 706, la passerelle de collecte 120 est hors délai pour pouvoir relayer la trame descendante au dispositif terminal en question. La passerelle de collecte jette donc la trame descendante. Il est alors de la responsabilité du serveur 130 de retransmettre ultérieurement les données utiles qui étaient contenues dans ladite trame descendante.

La **Fig. 8** illustre schématiquement un algorithme de traitement de changement de délégation. L'algorithme de la Fig. 8 est implémenté par le serveur 130.

Dans une étape 801, le serveur 130 détecte un besoin de changement de délégation. En d'autres termes, le serveur 130 décide de confier la gestion des acquittements et de la transmission des trames descendantes, pour un dispositif terminal donné, à une autre passerelle de collecte. Par exemple, lorsque les passerelles de collecte relaient des trames ascendantes vers le serveur 130, lesdites passerelles de collecte fournissent au serveur 130 des indications d'intensité de signal reçu RSSI (« Received Signal Strength Indicator » en anglais) et/ou de rapport signal-à-bruit SNR (« Signal-to-Noise Ratio » en anglais), et le serveur 130 a détecté que la passerelle de collecte à laquelle la gestion des acquittements et de la transmission des trames descendantes a été confiée fournit des informations de performance en réception en dessous d'un seuil prédéfini alors que ladite autre passerelle de collecte fournit des informations de performance en réception au-dessus dudit seuil prédéfini.

Dans une étape 802, le serveur 130 arrête la délégation en cours. Pour ce faire, le serveur 130 envoie un message STOP-RQ concernant ledit dispositif terminal à la passerelle de collecte à laquelle le serveur 130 avait précédemment demandé d'activer le mécanisme de délégation.

Dans une étape 803, le serveur 130 attend une confirmation, par un message STATUS, que ladite passerelle de collecte a désactivé le mécanisme de délégation pour ledit dispositif terminal. Sur réception du message STATUS, le serveur 130 déduit que ladite passerelle de collecte a transmis toute donnée utile, à l'attention dudit dispositif terminal, qui était en attente en tampon au sein de ladite passerelle de collecte.

Dans une étape 804, le serveur 130 enclenche la délégation auprès de ladite autre passerelle de collecte. Pour ce faire, le serveur 130 envoie un message START-RQ concernant ledit dispositif terminal à ladite autre passerelle de collecte. Toute nouvelle donnée à l'attention dudit dispositif terminal est alors envoyée par le serveur 130 à ladite autre passerelle de collecte pour stockage en tampon, la gestion des acquittements et de la transmission des trames descendantes étant ainsi confiée à ladite autre passerelle de collecte.

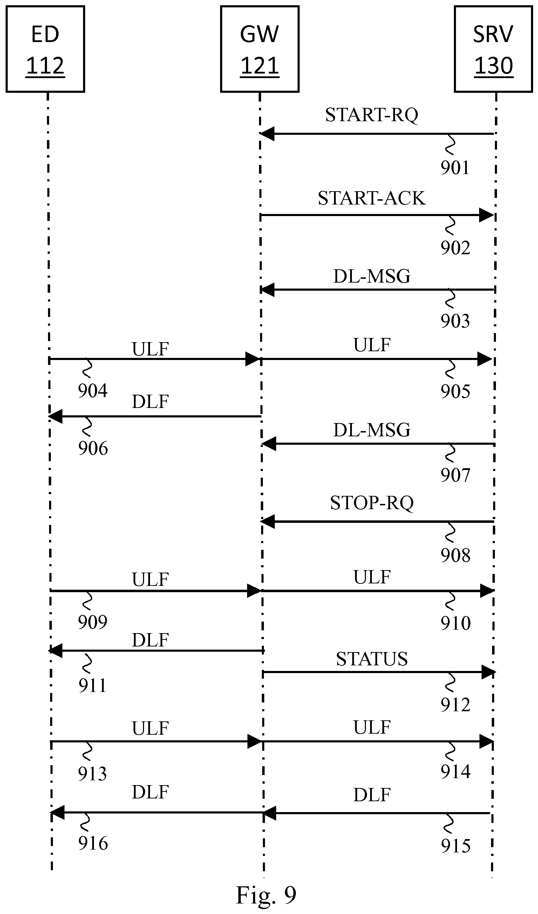

La **Fig. 9** illustre schématiquement des échanges aux fins d'une mise en place de délégation, dans un mode de réalisation particulier de l'invention. De manière illustrative, les échanges sont décrits entre le serveur 130, la passerelle de collecte 121 et le dispositif terminal 112.

Dans une étape 901, le serveur 130 transmet à la passerelle de collecte 121 un message START-RQ concernant le dispositif terminal 112. Le serveur 130 ordonne ainsi à la passerelle de collecte 121 d'activer le mécanisme de délégation, afin de déléguer à la passerelle de collecte 121 la gestion des acquittements et de la transmission des trames descendantes vis-à-vis du dispositif terminal 112.

Dans une étape optionnelle 902, la passerelle de collecte 121 active le mécanisme de délégation pour le dispositif terminal 112, et transmet au serveur 130 un message START-ACK acquittant le message START-RQ, signifiant ainsi au serveur 130 que la délégation a été acceptée et mise en place.

Dans une étape 903, le serveur 130 transmet à la passerelle de collecte 121 un message DL-MSG incluant des données utiles à l'attention du dispositif terminal 112. Les données utiles en question sont alors stockées par la passerelle de collecte 121 dans le tampon affecté au dispositif terminal 112, dans l'attente de la survenue d'une fenêtre de réception pour le dispositif terminal 112 suite à une transmission de trame ascendante par le dispositif terminal 112.

Dans une étape 904, le dispositif terminal 112 transmet une trame ascendante ULF (« UpLink Frame » en anglais), captée par la passerelle de collecte 121.

Dans une étape 905, la passerelle de collecte 121 fait suivre la trame ascendante ULF au serveur 130, en application de l'algorithme de la Fig. 6.

Dans une étape 906, la passerelle de collecte 121 construit une trame descendante DLF (« DownLink Frame » en anglais) acquittant la trame ascendante ULF reçue et incluant les données utiles mises en tampon suite à la réception du message DL-MSG transmis à l'étape 903. La transmission de la trame descendante DLF est effectuée dans une fenêtre de réception définie d'après un instant de transmission de la trame ascendante ULF de l'étape 905. La délégation permet ainsi notamment d'éviter que le serveur 130 soit hors délai pour acquitter la trame ascendante ULF en question.

Dans une étape 907, le serveur 130 transmet à la passerelle de collecte 121 un nouveau message DL-MSG incluant des données utiles à l'attention du dispositif terminal 112. Les données utiles en question sont alors stockées par la passerelle de collecte 121 dans le tampon affecté au dispositif terminal 112, dans l'attente de la survenue d'une nouvelle fenêtre de réception pour le dispositif terminal 112 suite à une transmission de nouvelle trame ascendante par le dispositif terminal 112.

Les échanges entre le serveur 130 et le dispositif terminal 112 peuvent ainsi continuer comme décrits en relation avec les étapes 903 à 906 jusqu'à ce que le serveur 130 ordonne la désactivation du mécanisme de délégation vis-à-vis du dispositif terminal 112.

Dans une étape 908, le serveur 130 transmet à la passerelle de collecte 121 un message STOP-RQ ordonnant de désactiver le mécanisme de délégation vis-à-vis du dispositif terminal 112. La passerelle de collecte 121 détecte que le tampon associé au dispositif terminal 112 n'est pas encore vide.

Dans une étape 909, le dispositif terminal 112 transmet une nouvelle trame ascendante ULF, captée par la passerelle de collecte 121.

Dans une étape 910, la passerelle de collecte 121 fait suivre ladite nouvelle trame ascendante ULF au serveur 130, en application de l'algorithme de la Fig. 6.

Dans une étape 911, la passerelle de collecte 121 construit une nouvelle trame descendante DLF acquittant ladite nouvelle trame ascendante ULF reçue et incluant les données utiles mises en tampon suite à la réception du message DL-MSG transmis à l'étape 907. La transmission de ladite nouvelle trame descendante DLF est effectuée dans une fenêtre de réception définie d'après un instant de transmission de ladite nouvelle trame ascendante ULF de l'étape 909. Si les données utiles restant en tampon sont trop nombreuses pour être transmises en une fois au dispositif terminal 112, la passerelle de collecte 121 se met en attente de recevoir encore au moins une nouvelle trame ascendante en provenance du dispositif terminal 112 pour réitérer l'étape 911.

Dans une étape 912, la passerelle de collecte 121 détecte que le tampon associé au dispositif terminal 112 est vide, et transmet au serveur 130 un message STATUS confirmant la désactivation du mécanisme de délégation pour le dispositif terminal 112.

Les échanges entre le serveur 130 et le dispositif terminal 112 reprennent alors en utilisant la passerelle de collecte 121 (ou une autre passerelle de collecte) comme simple relais, la gestion des acquittements et de la transmission des trames descendantes étant alors reprise par le serveur 130. Même si une nouvelle délégation a été faite auprès d'une autre passerelle de collecte pour le dispositif terminal 112, la passerelle de collecte 121 continue de faire suivre les trames ascendantes émanant du dispositif terminal 112, en charge au serveur 130 de gérer toute déduplication de données.

Ainsi, dans une étape 913, le dispositif terminal 112 transmet une trame ascendante ULF (« UpLink Frame » en anglais), captée par la passerelle de collecte 121.

Dans une étape 914, la passerelle de collecte 121 fait suivre la trame ascendante ULF au serveur 130, en application de l'algorithme de la Fig. 6. La passerelle de collecte 121 programme au moins une fenêtre de réception définie d'après l'instant de transmission de la trame ascendante ULF de l'étape 913.

Dans une étape 915, le serveur 130 transmet à la passerelle de collecte 121 (dès lors que le serveur 130 a choisi la passerelle de collecte 121 comme relais pour propager l'acquittement et éventuellement d'autres données au dispositif terminal 112 en réponse à la trame ascendante de l'étape 913) une trame descendante DLF à l'attention du dispositif terminal 112.

Dans une étape 916, la passerelle de collecte 121 relaie la trame descendante DLF à destination du dispositif terminal 112. La transmission de cette trame descendante DLF est effectuée dans une fenêtre de réception précédemment programmée. Le temps d'aller-retour entre la passerelle de collecte 121 et le serveur 130, ajouté au temps de traitement par le serveur 130, doit être suffisamment court pour permettre à la passerelle de collecte 121 d'être prête à relayer ladite trame descendante DLF avant que ne survienne ladite fenêtre de réception programmée. Dans le cas contraire, la trame descendante ULF est jetée par la passerelle de collecte 121, et de nouveaux échanges entre le dispositif terminal 112 et le serveur 130 doivent être mis en place pour tenter de transmettre les données utiles et acquittements concernés.

## Revendications

1. Procédé de gestion d'acquittements et de transmissions descendantes dans un système de communication comprenant un serveur (130), au moins un dispositif terminal (110, 111, 112) et au moins une passerelle de collecte (120, 121, 122, 123) servant de relais entre le serveur (130) et ledit au moins un terminal (110, 111, 112), chaque dispositif terminal (110, 111, 112) communiquant avec au moins une dite passerelle de collecte (120, 121, 122, 123) via un medium de communication sans-fil, chaque dispositif terminal (110, 111, 112) transmettant (904, 909) à destination du serveur (130) des trames ascendantes ayant des instants de transmission d'après lesquels sont définies des fenêtres de réception destinées à des trames descendantes supposées être construites par le serveur (130) et relayées via le medium de communication sans-fil par une dite passerelle de collecte (121) sélectionnée par le serveur (130),
**caractérisé en ce qu'**un mécanisme débrayable de délégation vis-à-vis d'au moins un dispositif terminal élu (112) est implémenté en collaboration avec le serveur (130) par une passerelle de collecte élue (121) effectuant les étapes suivantes :
- affecter un tampon, qui est compris dans la passerelle de collecte (121), à chaque dispositif terminal élu (112) et y stocker des données utiles reçues de manière asynchrone depuis le serveur (130) à l'attention dudit dispositif terminal élu (112) ; et
- acquitter (906) les trames ascendantes reçues depuis chaque dispositif terminal élu (112) en construisant et en transmettant (604) dans des dites fenêtres de réception définies d'après les instants de transmission desdites trames ascendantes, pour le compte du serveur (130), des trames descendantes incluant des acquittements respectifs desdites trames ascendantes et incluant, le cas échéant, des données utiles stockées dans le tampon affecté audit dispositif terminal (112).

2. Procédé selon la revendication 1, **caractérisé en ce que** la passerelle de collecte élue (121) effectue les étapes suivantes, sur réception (904, 909) d'une trame ascendante :
- relayer (905, 910) la trame ascendante vers le serveur (130) ;
- dans le cas où la trame ascendante est reçue depuis un dispositif terminal élu (112), construire (604) une dite trame descendante pour le compte du serveur (130), puis transmettre (906, 911) la trame descendante construite dans une fenêtre de réception définie d'après un instant de transmission (905) de ladite trame ascendante ; et
- dans le cas où la trame ascendante est reçue depuis un dispositif terminal non élu (111), garder une trace qu'un retour est attendu du serveur (130) vis-à-vis dudit dispositif terminal (111) pour ladite trame ascendante ;
et effectue les étapes suivantes, sur réception (603, 616) d'une trame descendante :
- dans le cas où la trame descendante concerne un dispositif terminal élu (112), placer (703) les données utiles, fournies dans la trame descendante par le serveur (130), dans le tampon affecté audit dispositif terminal élu (112) ; et
- dans le cas où la trame descendante concerne un dispositif terminal non élu (111), lorsqu'une trace a été gardée qu'un retour est attendu du serveur (130) vis-à-vis d'une trame ascendante reçue dudit dispositif terminal non élu (111), relayer (705, 916) la trame descendante dans une dite fenêtre de réception définie d'après un instant de réception de ladite trame ascendante, et jeter (706) la trame descendante sinon.

3. Procédé selon l'une quelconque des revendications 1 et 2, **caractérisé en ce que**, sur ordre de désactivation (501, 908) du mécanisme de délégation vis-à-vis d'un dit dispositif terminal élu (112), la passerelle de collecte élue (121) effectue les étapes suivantes :
- si le tampon affecté au dispositif terminal élu (112) est vide, confirmer (503, 912) auprès du serveur (130) que le mécanisme de délégation est désactivé vis-à-vis dudit dispositif terminal élu (112) ;
- si le tampon affecté au dispositif terminal élu (112) n'est pas vide, maintenir le mécanisme de délégation jusqu'à ce que ledit tampon soit vidé par construction et transmission (911) de dites trames descendantes par la passerelle de collecte élue (121).

4. Procédé selon la revendication 3, **caractérisé en ce que** :
- sur ordre d'activation (401, 901) du mécanisme de délégation vis-à-vis d'un dit dispositif terminal élu (112), une dite passerelle de collecte (121) devient la passerelle de collecte élue pour ledit dispositif terminal élu (112) et reçoit du serveur (130) une valeur de compteur de trames descendantes,
- la passerelle de collecte élue (121) incrémente la valeur du compteur de trames descendantes au fil des constructions desdites trames descendantes à l'attention dudit dispositif terminal élu (112) et inclut la valeur incrémentée du compteur de trames descendantes dans lesdites trames descendantes, et
- sur ordre de désactivation (501, 908) du mécanisme de délégation vis-à-vis dudit dispositif terminal élu (112), la passerelle de collecte élue (121) inclut une valeur à jour du compteur de trames descendantes dans un message confirmant auprès du serveur (130) que le mécanisme de délégation est désactivé vis-à-vis dudit dispositif terminal élu (112).

5. Procédé selon la revendication 4, **caractérisé en ce que**, sur ordre d'activation (401, 901) du mécanisme de délégation vis-à-vis dudit dispositif terminal élu (112), la passerelle de collecte élue (121) reçoit du serveur (130) une information indiquant quel format est utilisé pour représenter la valeur du compteur de trames descendantes.

6. Procédé selon l'une quelconque des revendications 1 à 5, **caractérisé en ce que**, sur ordre d'activation (401, 901) du mécanisme de délégation vis-à-vis d'un dit dispositif terminal élu (112), la passerelle de collecte élue (121) reçoit du serveur (130) des clefs de sécurité pour authentifier ledit dispositif terminal élu (112) dans chaque trame ascendante supposée être reçue depuis ledit dispositif terminal élu (112) et pour chiffrer toute trame descendante construite par la passerelle de collecte élue (121) à l'attention dudit dispositif terminal élu (112).

7. Procédé selon l'une quelconque des revendications 1 à 6, **caractérisé en ce que** le système de communication est un réseau étendu à faible puissance LPWAN.

8. Produit programme d'ordinateur comportant un ensemble d'instructions causant l'exécution, par un processeur (201) d'une passerelle de collecte (121) d'un système de communication, le procédé selon l'une quelconque des revendications 1 à 7, lorsque ledit programme d'ordinateur est exécuté par ledit processeur (201).

9. Support de stockage d'informations stockant un programme d'ordinateur comportant un ensemble d'instructions causant l'exécution, par un processeur (201) d'une passerelle de collecte (121) d'un système de communication, le procédé selon l'une quelconque des revendications 1 à 7, lorsque ledit programme d'ordinateur est exécuté par ledit processeur (201).

10. Passerelle de collecte (121), dite passerelle de collecte élue, dans le cadre d'une gestion d'acquittements et de transmissions descendantes dans un système de communication comprenant un serveur (130), au moins un dispositif terminal (110, 111, 112) et au moins une passerelle de collecte (120, 121, 122, 123) servant de relais entre le serveur (130) et ledit au moins un terminal (110, 111, 112), chaque dispositif terminal (110, 111, 112) communiquant avec au moins une dite passerelle de collecte (120, 121, 122, 123) via un medium de communication sans-fil, chaque dispositif terminal (110, 111, 112) transmettant à destination du serveur (130) des trames ascendantes ayant des instants de transmission d'après lesquels sont définies des fenêtres de réception destinées à des trames descendantes supposées être construites par le serveur (130) et relayées via le medium de communication sans-fil par une dite passerelle de collecte (121) sélectionnée par le serveur,
**caractérisée en ce que** ladite passerelle de collecte élue (121) implémente en collaboration avec le serveur un mécanisme débrayable de délégation vis-à-vis d'au moins un dispositif terminal élu (112), dans lequel ladite passerelle de collecte élue (121) comporte :
- des moyens pour affecter un tampon à chaque dispositif terminal élu (112) et y stocker des données utiles reçues de manière asynchrone depuis le serveur (130) à l'attention dudit dispositif terminal élu (112) ; et
- des moyens pour acquitter (906) les trames ascendantes reçues depuis chaque dispositif terminal élu (112) en construisant et en transmettant (604) dans des dites fenêtres de réception définies d'après les instants de transmission desdites trames ascendantes, pour le compte du serveur (130), des trames descendantes incluant des acquittements respectifs desdites trames ascendantes et incluant, le cas échéant, des données utiles stockées dans le tampon affecté audit dispositif terminal (112).

## Patentansprüche

1. Verfahren zur Verwaltung von Quittierungen und Abwärtsübertragungen in einem Kommunikationssystem, das einen Server (130), mindestens eine Endgerätvorrichtung (110, 111, 112) und mindestens einen Sammel-Gateway (120, 121, 122, 123), der als Relais zwischen dem Server (130) und dem mindestens einen Endgerät (110, 111, 112) dient, umfasst, wobei jede Endgerätvorrichtung (110, 111, 112) mit mindestens einem Sammel-Gateway (120, 121, 122, 123) über ein Drahtloskommunikationsmedium kommuniziert, wobei jede Endgerätvorrichtung (110, 111, 112) an den Server (130) Aufwärtsrahmen mit Übertragungszeitpunkten überträgt (904, 909), gemäß welchen Empfangsfenster definiert sind, die für Abwärtsrahmen bestimmt sind, die vom Server (130) erstellt und über das Drahtloskommunikationsmedium durch einen Sammel-Gateway (121) weitergeleitet werden sollen, der vom Server (130) ausgewählt wird,
**dadurch gekennzeichnet, dass** ein entkoppelbarer Delegierungsmechanismus gegenüber mindestens einer gewählten Endgerätvorrichtung (112) in Zusammenarbeit mit dem Server (130) durch einen gewählten Sammel-Gateway (121) implementiert ist, der die folgenden Schritte durchführt:
- Zuweisen eines Puffers, der im Sammel-Gateway (121) enthalten ist, an jede gewählte Endgerätvorrichtung (112) und asynchrones Speichern von empfangenen Nutzdaten darin von dem Server (130) an die gewählte Endgerätvorrichtung (112); und
- Quittieren (906) der Aufwärtsrahmen, die von jeder gewählten Endgerätvorrichtung (112) empfangen werden, durch Erstellen und Übertragen (604), in Empfangsfenstern, die gemäß den Übertragungszeitpunkten der Aufwärtsrahmen definiert sind, im Auftrag des Servers (130), von Abwärtsrahmen, die jeweilige Quittierungen der Aufwärtsrahmen enthalten und gegebenenfalls Nutzdaten enthalten, die in dem Puffer gespeichert sind, der der Endgerätvorrichtung (112) zugewiesen ist.

2. Verfahren nach Anspruch 1, **dadurch gekennzeichnet, dass** der gewählte Sammel-Gateway (121) bei Empfang (904, 909) eines Aufwärtsrahmens die folgenden Schritte durchführt:
- Weiterleiten (905, 910) des Aufwärtsrahmens zum Server (130);
- in dem Fall, dass der Aufwärtsrahmen von einer gewählten Endgerätvorrichtung (112) empfangen wird, Erstellen (604) eines Abwärtsrahmens im Auftrag des Servers (130), dann Übertragen (906, 911) des erstellten Abwärtsrahmens in einem Empfangsfenster, das gemäß einem Übertragungszeitpunkt (905) des Aufwärtsrahmens definiert ist; und
- in dem Fall, dass der Aufwärtsrahmen von einer nicht gewählten Endgerätvorrichtung (111) empfangen wird, Behalten eines Hinweises darauf, dass eine Rückmeldung vom Server (130) gegenüber der Endgerätvorrichtung (111) für den Aufwärtsrahmen erwartet wird;
und bei Empfang (603, 616) eines Abwärtsrahmens die folgenden Schritte durchführt:
- in dem Fall, dass der Abwärtsrahmen eine gewählte Endgerätvorrichtung (112) betrifft, Ablegen (703) der Nutzdaten, die im Abwärtsrahmen vom Server (130) bereitgestellt werden, in dem Puffer, der der gewählten Endgerätvorrichtung (112) zugewiesen ist; und
- in dem Fall, dass der Abwärtsrahmen eine nicht gewählte Endgerätvorrichtung (111) betrifft, wenn ein Hinweis darauf behalten wurde, dass eine Rückmeldung vom Server (130) gegenüber einem Aufwärtsrahmen erwartet wird, der von der nicht gewählten Endgerätvorrichtung (111) empfangen wird, Weiterleiten (705, 916) des Abwärtsrahmens in einem Empfangsfenster, das gemäß einem Empfangszeitpunkt des Aufwärtsrahmens definiert ist, und Verwerfen (706) des Abwärtsrahmens anderenfalls.

3. Verfahren nach einem der Ansprüche 1 und 2, **dadurch gekennzeichnet, dass**, auf Befehl zur Deaktivierung (501, 908) des Delegierungsmechanismus gegenüber einer gewählten Endgerätvorrichtung (112) der Sammel-Gateway (121) die folgenden Schritte durchführt:
- wenn der Puffer, der der gewählten Endgerätvorrichtung (112) zugewiesen ist, leer ist, Bestätigen (503, 912) gegenüber dem Server (130), dass der Delegierungsmechanismus gegenüber der gewählten Endgerätvorrichtung (112) deaktiviert ist;
- wenn der Puffer, der der gewählten Endgerätvorrichtung (112) zugewiesen ist, nicht leer ist, Beibehalten des Delegierungsmechanismus, bis der Puffer durch Erstellen und Übertragen (911) von Abwärtsrahmen durch den gewählten Sammel-Gateway (121) geleert ist.

4. Verfahren nach Anspruch 3, **dadurch gekennzeichnet, dass**:
- auf Befehl zur Aktivierung (401, 901) des Delegierungsmechanismus gegenüber einer gewählten Endgerätvorrichtung (112) ein Sammel-Gateway (121) der gewählte Sammel-Gateway für die gewählte Endgerätvorrichtung (112) wird und vom Server (130) einen Abwärtsrahmenzählerwert empfängt,
- der gewählte Sammel-Gateway (121) den Wert des Abwärtsrahmenzählers im Zuge der Erstellungen der Abwärtsrahmen an die gewählte Endgerätvorrichtung (112) inkrementiert und den inkrementierten Wert des Abwärtsrahmenzählers in die Abwärtsrahmen einfügt, und
- auf Befehl zur Deaktivierung (501, 908) des Delegierungsmechanismus gegenüber der gewählten Endgerätvorrichtung (112) der gewählte Sammel-Gateway (121) einen aktuellen Wert des Abwärtsrahmenzählers in eine Nachricht einfügt, die gegenüber dem Server (130) bestätigt, dass der Delegierungsmechanismus gegenüber der gewählten Endgerätvorrichtung (112) deaktiviert ist.

5. Verfahren nach Anspruch 4, **dadurch gekennzeichnet, dass** auf Befehl zur Aktivierung (401, 901) des Delegierungsmechanismus gegenüber der gewählten Endgerätvorrichtung (112) der gewählte Sammel-Gateway (121) vom Server (130) eine Information empfängt, die angibt, welches Format genutzt wird, um den Wert des Abwärtsrahmenzählers darzustellen.

6. Verfahren nach einem der Ansprüche 1 bis 5, **dadurch gekennzeichnet, dass** auf Befehl zur Aktivierung (401, 901) des Delegierungsmechanismus gegenüber einer gewählten Endgerätvorrichtung (112) der gewählte Sammel-Gateway (121) vom Server (130) Sicherheitsschlüssel empfängt, um die gewählte Endgerätvorrichtung (112) in jedem Aufwärtsrahmen zu authentifizieren, der von der gewählten Endgerätvorrichtung (112) empfangen werden soll, und um jeden Abwärtsrahmen zu verschlüsseln, der vom gewählten Sammel-Gateway (121) an die gewählte Endgerätvorrichtung (112) erstellt ist.

7. Verfahren nach einem der Ansprüche 1 bis 6, **dadurch gekennzeichnet, dass** das Kommunikationssystem ein Niedrigenergie-Weitverkehrsnetz, LPWAN, ist.

8. Computerprogrammprodukt, das einen Befehlssatz aufweist, der die Ausführung, durch einen Prozessor (201) eines Sammel-Gateways (121) eines Kommunikationssystems, des Verfahrens nach einem der Ansprüche 1 bis 7 bewirkt, wenn das Computerprogramm von dem Prozessor (201) ausgeführt wird.

9. Informationsspeichermedium, das ein Computerprogramm speichert, das einen Befehlssatz aufweist, der die Ausführung, durch einen Prozessor (201) eines Sammel-Gateways (121) eines Kommunikationssystems, des Verfahrens nach einem der Ansprüche 1 bis 7 bewirkt, wenn das Computerprogramm von dem Prozessor (201) ausgeführt wird.

10. Sammel-Gateway (121), gewählter Sammel-Gateway genannt, im Rahmen einer Verwaltung von Quittierungen und Abwärtsübertragungen in einem Kommunikationssystem, das einen Server (130), mindestens eine Endgerätvorrichtung (110, 111, 112) und mindestens einen Sammel-Gateway (120, 121, 122, 123), der als Relais zwischen dem Server (130) und dem mindestens einen Endgerät (110, 111, 112) dient, umfasst, wobei jede Endgerätvorrichtung (110, 111, 112) mit mindestens einem Sammel-Gateway (120, 121, 122, 123) über ein Drahtloskommunikationsmedium kommuniziert, wobei jede Endgerätvorrichtung (110, 111, 112) an den Server (130) Aufwärtsrahmen mit Übertragungszeitpunkten überträgt, gemäß welchen Empfangsfenster definiert sind, die für Abwärtsrahmen bestimmt sind, die vom Server (130) erstellt und über das Drahtloskommunikationsmedium durch einen Sammel-Gateway (121) weitergeleitet werden sollen, der vom Server ausgewählt wird, **dadurch gekennzeichnet, dass** der gewählte Sammel-Gateway (121) in Zusammenarbeit mit dem Server einen entkoppelbaren Delegierungsmechanismus gegenüber mindestens einer gewählten Endgerätvorrichtung (112) implementiert, wobei der gewählte Sammel-Gateway (121) Folgendes aufweist:
- Mittel zum Zuweisen eines Puffers an jede gewählte Endgerätvorrichtung (112) und asynchrones Speichern von empfangenen Nutzdaten darin von dem Server (130) an die gewählte Endgerätvorrichtung (112); und
- Mittel zum Quittieren (906) der Aufwärtsrahmen, die von jeder gewählten Endgerätvorrichtung (112) empfangen werden, durch Erstellen und Übertragen (604), in Empfangsfenstern, die gemäß den Übertragungszeitpunkten der Aufwärtsrahmen definiert sind, im Auftrag des Servers (130), von Abwärtsrahmen, die jeweilige Quittierungen der Aufwärtsrahmen enthalten und gegebenenfalls Nutzdaten enthalten, die in dem Puffer gespeichert sind, der der Endgerätvorrichtung (112) zugewiesen ist.

## Claims

1. Method for managing acknowledgements and downlink transmissions in a communication system comprising a server (130), at least one end device (110, 111, 112) and at least one gathering gateway (120, 121, 122, 123) serving as a relay between the server (130) and said at least one end device (110, 111, 112), each end device (110, 111, 112) communicating with at least one said gathering gateway (120, 121, 122, 123) via a wireless communication medium, each end device (110, 111, 112) transmitting (904, 909), to the server (130), uplink frames having moments of transmission according to which reception windows are defined, intended for downlink frames supposed to be constructed by the server (130) and relayed on the wireless communication medium via one said gathering gateway (121) selected by the server,
**characterised in that** a disengageable delegation mechanism vis-à-vis at least one elected end device (112) is implemented in collaboration with the server (130) by an elected gathering gateway (121) performing the following steps:
- allocating a buffer, which is comprised in the gathering gateway (121), to each elected end device (112) and storing therein useful data received asynchronously from the server (130) for the attention of said elected end device (112); and
- acknowledging (906) the uplink frames received from said elected end device (112) by constructing and transmitting (604) in said reception windows defined according to the moments of transmission of said uplink frames, on behalf of the server (130), downlink frames including respective acknowledgements of said uplink frames and including useful data stored, if any, in the buffer allocated to said end device (112).

2. Method according to claim 1, **characterised in that** the elected gathering gateway (121) performs the following steps, on reception (904, 909) of an uplink frame:
- relaying (905, 910) the uplink frame to the server (130);
- in the case where the uplink frame is received from an elected end device (112), constructing (604) one said downlink frame on behalf of the server (130), and then transmitting (906, 911) the constructed downlink frame in a reception window defined according to a moment of transmission (905) of said uplink frame; and
- in the case where the uplink frame is received from a non-elected end device (111), keeping track that a feedback is expected from the server (130) vis-à-vis said end device (111) for said uplink frame;
and performs the following steps, on reception (603, 616) of a downlink frame:
- in the case where the downlink frame concerns an elected end device (112), placing (703) the useful data, supplied in the downlink frame by the server (130), in the buffer allocated to said elected end device (112); and,
- in the case where the downlink frame concerns a non-elected end device (111), when track has been kept of the fact that a feedback is expected from the server (130) vis-à-vis an uplink frame received from said non-elected end device (111), relaying (705, 916) the downlink frame in one said reception window defined according to a moment of reception of said uplink frame, and discarding (706) the downlink frame otherwise.

3. Method according to any one of claims 1 and 2, **characterised in that**, on instruction to deactivate (501, 908) the delegation mechanism vis-à-vis one said elected end device (112), the elected gathering gateway (112) performs the following steps:
- if the buffer allocated to the elected end device (112) is empty, confirming (503, 912) to the server (130) that the delegation mechanism is deactivated vis-à-vis said elected end device (112);
- if the buffer allocated to the elected end device (112) is not empty, maintaining the delegation mechanism until said buffer is emptied by construction and transmission (911) of said downlink frames by the elected gathering gateway (121).

4. Method according to claim 3, **characterised in that**:
- on instruction to activate (401, 901) the delegation mechanism vis-à-vis one said elected end device (112), one said gathering gateway (121) becomes the elected gathering gateway for said elected end device (112) and receives from the server (130) a downlink-frame counter value,
- the elected gathering gateway (121) increments the downlink-frame counter value as said downlink frames are constructed for the attention of said elected end device (112) and includes the incremented value of the downlink-frame counter in said downlink frames, and
- on instruction to deactivate (501, 908) the delegation mechanism vis-à-vis said elected end device (112), the elected gathering gateway (121) includes an up-to-date value of the downlink-frame counter in a message confirming to the server (130) that the delegation mechanism is deactivated vis-à-vis said elected end device (112).

5. Method according to claim 4, **characterised in that**, on instruction to activate (401, 901) the delegation mechanism vis-à-vis said elected end device (112), the elected gathering gateway (121) receives from the server (130) information indicating which format is used for representing the value of the downlink-frame counter.

6. Method according to any one of claims 1 to 5, **characterised in that**, on instruction to activate (401, 901) the delegation mechanism vis-à-vis one said elected end device (112), the elected gathering gateway (121) receives from the server (130) security keys for authenticating said elected end device (112) in each uplink frame supposed to be received from said elected end device (112) and for encrypting any downlink frame constructed by the elected gathering gateway (121) for the attention of said elected end device (112).

7. Method according to any one of claims 1 to 6, **characterised in that** the communication system is a low power wide-area network LPWAN.

8. Computer program product comprising a set of instructions causing execution, by a processor (201) of a gathering gateway (121) of a communication system, the method according to any one of claims 1 to 7, when said computer program is executed by said processor (201).

9. Information storage medium storing a computer program comprising a set of instructions causing execution, by a processor (201) of a gathering gateway (121) of a communication system, the method according to any one of claims 1 to 7, when said computer program is executed by said processor (201).

10. Gathering gateway (121), referred to as elected gathering gateway, in the context of a management of acknowledgements and downlink transmissions in a communication system comprising a server (130), at least one end device (110, 111, 112) and at least one gathering gateway (120, 121, 122, 123) serving as a relay between the server and said at least one end device (110, 111, 112), each end device communicating with at least one said gathering gateway (120, 121, 122, 123) via a wireless communication medium, each end device (110, 111, 112) transmitting, to the server (130), uplink frames having moments of transmission according to which reception windows are defined, intended for downlink frames supposed to be constructed by the server (130) and relayed on the wireless communication medium via one said gathering gateway (121) selected by the server,
**characterised in that** said elected gathering gateway (121) implements, in collaboration with the server, a disengageable delegation mechanism vis-à-vis at least one elected end device (112), wherein said elected gathering gateway (121) comprises:
- means for allocating a buffer to each elected end device (112) and storing therein useful data received asynchronously from the server (130) for the attention of said elected end device (112); and
- means for acknowledging the uplink frames received from each elected end device (112) by constructing and transmitting, in said reception windows defined according to the moments of transmission of said uplink frames, on behalf of the server (130), downlink frames including respective acknowledgements of said uplink frames and including, if any, useful data stored in the buffer allocated to said end device (112).
